# EUROPÄISCHE PATENTSCHRIFT

(11) **EP 1 010 616 B1**
(45) Veröffentlichungstag und Bekanntmachung des Hinweises auf die Patenterteilung: **20.10.2004**
(21) Anmeldenummer: 99124782.6
(22) Anmeldetag: 14.12.1999
(51) Int. Cl.: B64C 9/32, B64C 3/48

(54) **Adaptiver Flugzeugtragflügel**
Adaptive aircraft wing
Aile d'aéronef adaptative

(30) Priorität: 19.12.1998 DE 19858872
(43) Veröffentlichungstag der Anmeldung: 21.06.2000
(73) Patentinhaber: EADS Deutschland GmbH, 81663 München (DE)
(72) Erfinder: Müller, Günther, 83558 Maitenbeth (DE); Grünewald, Michael, 85635 Höhenkirchen (DE); Steigenberger, Josef, 83646 Bad Tölz (DE)

(56) Entgegenhaltungen:
- WO-A-93/02915
- DE-A- 3 444 485
- DE-A- 4 446 031

## Beschreibung

Die Erfindung betrifft einen adaptiven Flugzeugtragflügel.

Zur Adaption eines Flugzeugtragflügels hinsichtlich seines Auftriebes, seines Strömungswiderstandes und seiner Steuerwirkung auf die unterschiedlichen Flugzustände wie Start-, Reiseflug- und Landephase sind verschiedene Lösungen bekannt, die auf einer adaptiven Änderung des Tragflügelprofiles selbst beruhen (DE-A-20 26 054). Die Tragflügel sind dazu teilweise mit einer flexiblen Beplankung versehen, auf die innerhalb des Tragflügels über Aktuatoren mittels verstellbaren Strukturelementen eingewirkt wird.

Beim Reiseflug mit hohen Geschwindigkeiten treten auf der Oberseite eines Flugzeugtragflügels bekannterweise Stoßwellen auf, die durch ihre Form den Strömungswiderstand des Flugzeugtragflügels merklich erhöhen.

WO 93/02915 und DE 44 46 031 A1 offenbaren Flugzeugtragflügel, auf deren Oberseite in Höhe eines üblicherweise verwendeten Spoilers eine konvexe Ausbeulung zur adaptiven Kontrolle von Stoßwellen ausgefahren werden kann. Hierbei sind im Inneren des Profils mehrere Aktuatoren angebracht, mit denen die Profilhöhe lokal angehoben werden kann, womit eine diskrete Ausbeulung durchgeführt wird. Dabei ist das lokal erziehlbare Maximum in gewissen Grenzen frei wählbar.

Der Erfindung liegt die Aufgabe zugrunde, einen Flugzeugtragflügel mit einem auf seiner Oberseite mit einer flexiblen Beplankung versehenen Spoiler und einen auf diese wirkenden Aktor anzugeben, bei dem bei Bedarf eine konvexe Ausbeulung gebildet werden kann, die in ihrer Höhe ein festes Maß hat und deren Lage in Strömungsrichtung kontinuierlich veränderbar ist. Dieser Aufbau soll einfach und weitgehend wartungsfrei sein. Hinzu kommt, daß der Flugzeugflügel in seiner Gesamtheit den Luftlasten entsprechend stabil sein soll.

Diese Aufgabe wird erfindungsgemäß durch die Merkmale des Patentanspruchs 1 gelöst. Weiterbildungen der Erfindung sind in den Unteransprüchen angegeben.

Die erfindungsgemäße Lösung führt die Kontrolle einer Stoßwelle mittels einer adaptiven Profiländerung des Tragflügels durch. Dazu ist ein üblicherweise auf dem Tragflügel angeordneter Spoiler auf seiner Oberseite mit einer flexiblen Beplankung versehen und es wird bei Flugbedingungen, die ein Auftreten von Stoßwellen erwarten lassen, mittels Aktuatoren über Strukturelemente in dem Spoiler auf die flexible Beplankung derart eingewirkt, daß eine Ausbeulung der Spoileroberfläche entsteht. Das Maximum der sich mit geringen Steigungen über die gesamte Spoilerlänge erhebenden und wieder absenkenden flachen Beule ist zwischen ca. 30 % und ca. 80 % der Spoilertiefe über eine entsprechende Verstellung der Strukturelemente verschiebbar. Zwischen der Spoilervorderkante und der Vorderkante der flexiblen Beplankung ist vorteilhafterweise ein schmaler Schlitz ausgebildet. Es können aber auch Gründe vorliegen, die es notwendig machen, daß dieser von einem Dichtprofil ausgefüllt ist.

In einem Unteranspruch ist eine Weiterbildung der Erfindung aufgezeigt, die für Spoiler geeignet ist, auf deren Oberfläche nur eine geringe Sogwirkung auftritt. Nur mit einem einzigen Aktuator werden in dieser Variante sowohl die üblichen Betriebsstellungen des Spoilers in dem Flugzeugtragflügel als auch die Ausbeulung der Spoileroberfläche bewirkt.

Anhand der Zeichnung wird ein Ausführungsbeispiel der Erfindung näher erläutert.
- Fig. 1: zeigt den Spoiler eines erfindungsgemäßen Flugzeugtragflügels im Reiseflug ohne Stoßkontrolle,
- Fig.2: zeigt den Spoiler im Reiseflug mit adaptiver Stoßkontrolle,
- Fig.3: zeigt eine Innenansicht des vorderen Spoilerbereiches mit Blick von vorn,
- Fig.4: zeigt eine Lamellenabdeckung für die Spoilerseiten und
- Fig. 5: zeigt einen Spoiler mit nur einem Aktuator für den Stellbetrieb und für die Stoßkontrolle.

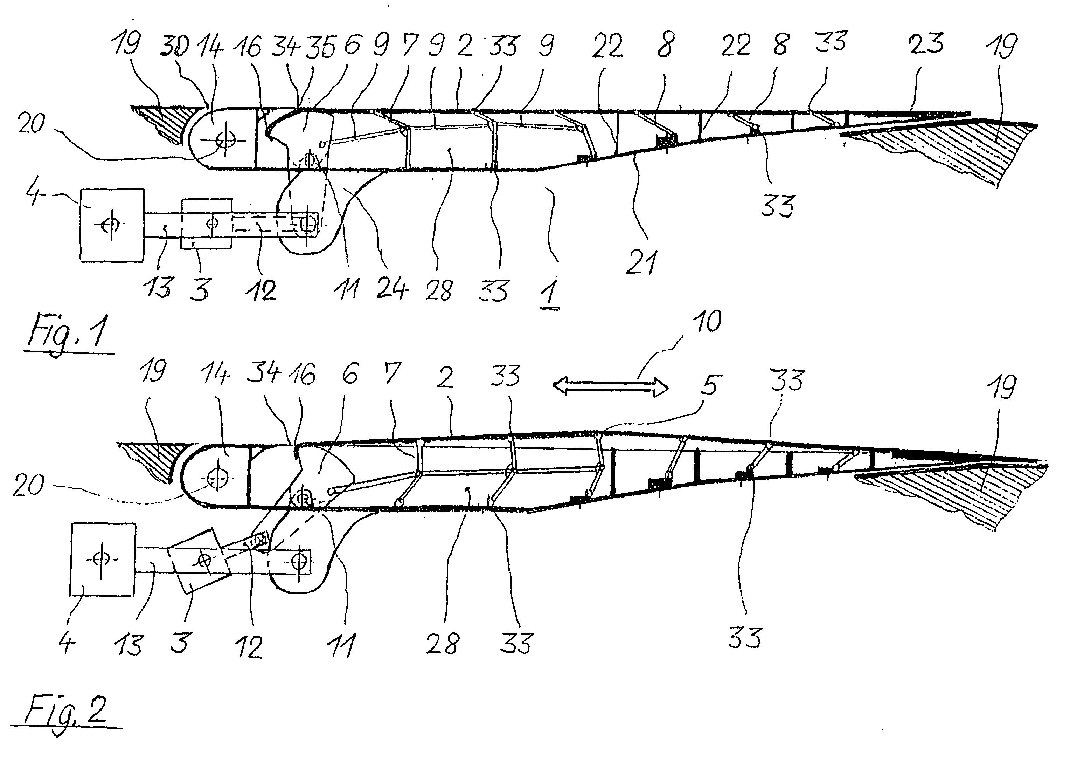

Der in Fig. 1 gezeigte Spoiler 1 besteht aus einer Spoilervorderkante 14 mit mehreren Hauptlagem 20, einer starren Spoilerunterseite 21, auf seiner Oberseite aus einer flexiblen Beplankung 2, inneren Strukturelementen 6,7,8 und 25, mit Gestänge 9 zur mechanischen Ankopplung der Strukturelemente 6 an die Strukturelemente 7, Querstringern 22, Längsspanten 28, einer in sich verschiebbaren Hinterkante 23 und zwei Spoilerhebeln 24, auf den ein zweiter Aktuator 4 mit seinem Stellarm 13 in bekannter Weise zur Verstellung des Spoilers 1 in seine verschiedenen Flugbetriebsstellungen einwirkt. Der Spoiler 1 dreht bei diesen Verstellungen um die zueinander fluchtenden Hauptlager 20.

Fig. 1 und Fig.2 zeigen den Spoiler in der Betriebsstellung für den Reiseflug, in welcher der Spoiler nicht angestellt ist und mit seiner Hinterkante 23 auf den angrenzenden Bereichen des Flugzeugtragflügels 19 aufliegt. Zur Kontrolle von Stoßwellen, die bei hohen Geschwindigkeiten im Reiseflug auftreten, wirken zwei parallele, erste Aktuatoren 3 mit seinen Stellarmen 12 über die Strukturelemente 6,7,8 und 25 derart auf die flexible Beplankung 2 ein, daß eine konvexe Ausbeulung der flexiblen Beplankung 2 entsteht (Fig.2). Das Maximum der Ausbeulung 5 ist zur adaptiven Kontrolle von Stoßwellen im Sinne des Richtungspfeiles 10 verschiebbar.

Dazu sind die beiden Stellarme 12 an zwei parallel wirkende Strukturelemente 6 angelenkt, die jeweils als ein zweiarmiger Hebel ausgebildet und im vorderen Bereich des Spoilers 1 in einem Lager 11 aufgenommen sind. Der eine Arm dieser Hebel ragt aus der Spoilerunterseite 21 heraus. An dessen Ende ist der Stellarm 12 des ersten Aktuators 3 angekoppelt. Der andere Hebelarm ragt in dem Spoiler 1 bis zur Oberseite hinauf An ihn ist jeweils die Vorderkante 16 der flexiblen Beplankung 2 befestigt. Auf einer Teillänge des oberen Hebelarmes ist jeweils das Gestänge 9 angekoppelt, das auf im vorderen Bereich des Spoilers 1 gelagerte Strukturelemente 7 einwirkt.

Die konvexe Ausbeulung der flexiblen Beplankung 2 wird mit einem Heranziehen der unteren Hebelarme durch die ersten Aktuatoren 3 bewirkt. Dabei schiebt der obere Hebelarm die Vorderkante 16 der flexiblen Beplankung 2 und mit dem Gestänge 9 die Strukturelemente 7 nach hinten. Die an die Strukturelemente fixierte flexible Beplankung 2 wird entsprechend der Stellung der Strukturelemente 7 und 8 zur Ausbeulung gezwungen und schiebt sich in der in sich verschiebbaren Hinterkante 23 nach hinten.

Die Kinematik der Strukturelemente 6,7, 8,25 und Gestänge 9 ist so ausgeführt, daß die Ausbeulung zuerst vorne in der flexiblen Beplankung 2 entsteht und bei einem weiteren Heranziehen der unteren Hebelarme nach hinten wandert. Durch eine mit einfachen Mittel erreichbare Änderung der Kinematik kann die Ausbeulung zuerst hinten entstehen und durch das weitere Heranziehen der Hebelarme nach vorne wandern.

Die in sich verschiebbare Hinterkante 23 ist so ausgebildet, daß die flexible Beplankung 2 und die Spoilerunterseite 21 an der Hinterkante des Spoilers so miteinander verbunden sind, daß eine Verschiebung gegeneinander in Spoilerlängsrichtung möglich ist; z.B. dadurch, daß die flexible Beplankung 2 gleitend in einem an der Spoilerunterseite 21 angeordneten Lager aufgenommen ist.

Die beim Heranziehen der unteren Hebelarme von den Gestängen 9 verschobenen Strukturelemente 7 unterstützen das Nachhintenschieben der flexiblen Beplankung 2 und kontrollieren gleichzeitig die Form der Ausbeulung. Dazu sind die Strukturelemente 7 an der flexiblen Beplankung 2 und an der starren Beplankung der Spoilerunterseite 21 in Gelenken 33 aufgenommen. Weitere Strukturelemente 8 , auf die kein Gestänge 9 einwirkt, sind im hinteren Teil des Spoilers 1 an der Ober- und Unterseite in Gelenken 33 gelagert und steuern die Form der Ausbeulung im hinteren Teil. Die Strukturelemente 7 und 8 und die Gestänge 9 erstrecken sich, unterbrochen durch Längsspanten 28 über die gesamte Spoilerbreite. Gegebenenfalls sind geeignete weitere Unterbrechungen, z.B. zur Erzielung von Gewichtseinsparungen möglich.

Je nach Stellung des Strukturelementes 6 ist die Position des Maximums der Ausbeulung 5 und die Beulenhöhe variierbar. Mit dem gezeigten Ausführungsbeispiel läßt sich die Position des Maximus der Ausbeulung 5 im Bereich von 30% bis 80% der Spoilertiefe adaptiv anpassen.

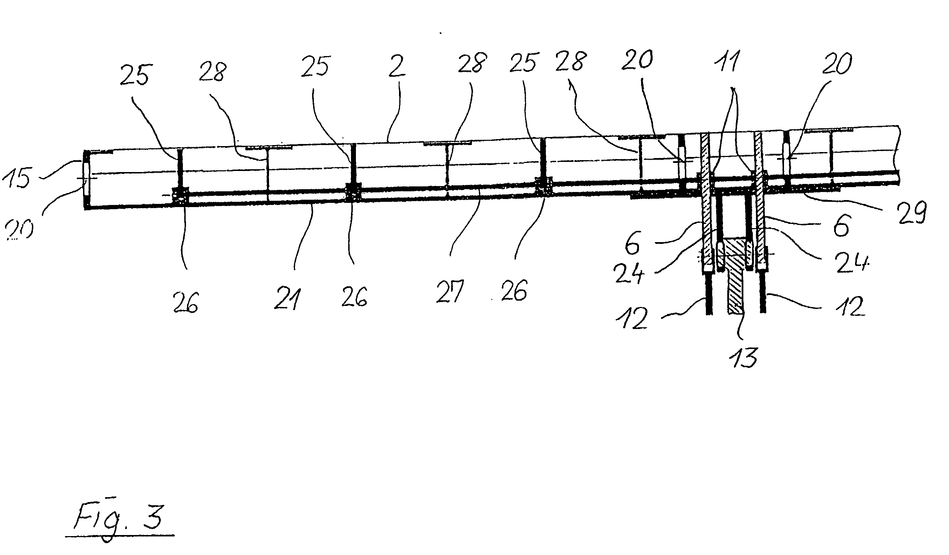

Fig.3 zeigt die Innenansicht des vorderen Spoilerbereiches mit Blick von vorn. Dabei ist die rechte Spoilerhälfte nur im Ansatz gezeigt, da sie symmetrisch zur linken Spoilerhälfte ausgebildet ist. Das Strukturelement 6 und der Spoilerhebel 24 sind doppelt ausgebildet. Die von den ersten Aktuatoren 3 in die Strukturelemente 6 eingeleitete Drehbewegung um die Lager 11 wird von einer Stellwelle 27, die kraftschlüssig mit den Strukturelementen 6 verbunden und an der Spoilerunterseite 21 in Lagern 26 aufgenommen ist, auf weitere Strukturelemente 25 kraftschlüssig übertragen. Diese Strukturelemente 25 verteilen sich gleichmäßig über die Breite des Spoilers 1. An ihnen ist die Vorderkante 16 der flexiblen Beplankung 2 befestigt, so daß sie dazu beitragen, die zur Ausbeulung der flexiblen Beplankung erforderlichen Schub- und Zugbewegungen gleichmäßig über die gesamte Spoilerbreite in die flexible Beplankung 2 einzuleiten.

In dem Spoiler sind in üblicher Weise Längsspanten 28 eingezogen. In den Spoilerseitenwänden 15 sind jeweils ein Hauptlager 20 des Spoilers aufgenommen. Weitere Hauptlager 20 befinden sich in einer starren Mittelstruktur 29 , an die auch zwei Spoilerhebel 24 angelenkt sind. Die Spoilerhebel 24 werden von dem Stellarm 13 des zweiten Aktuators 4 bewegt an dem sie gelenkig angekoppelt sind. Die Stellarme 12 für die ersten Aktuatoren 3 und der Stellarm 13 für den zweiten Aktuator 4 sind wegen der besseren zeichnerischen Darstellbarkeit wegen in Fig.3 um 90 grd nach unten geklappt dargestellt worden

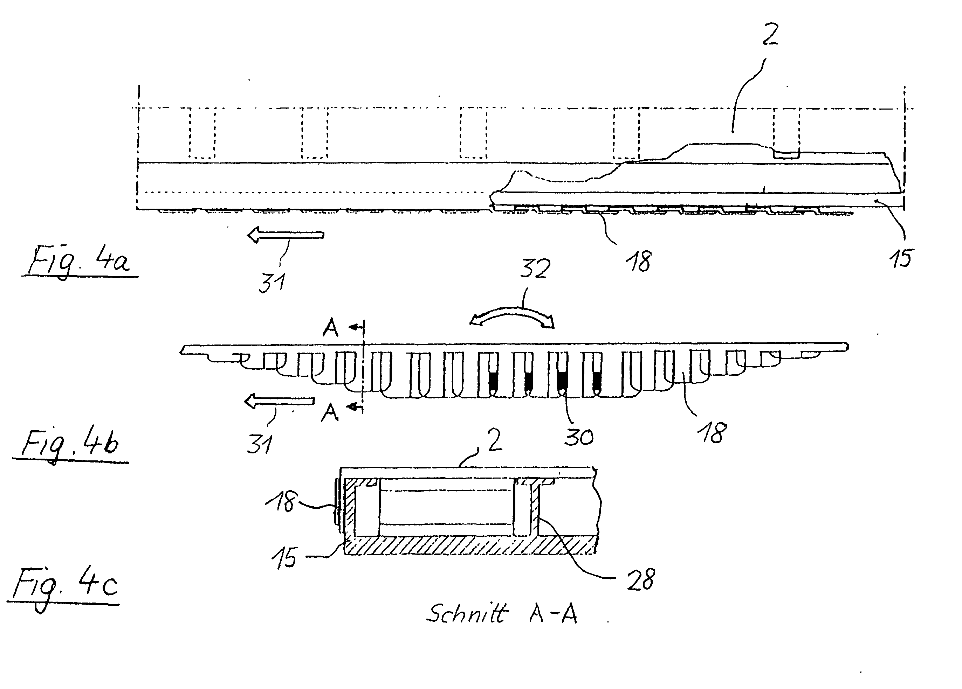

Die in Fig. 4a bis Fig. 4b gezeigte Lamellenstruktur 18 dient zur Abdeckung der bei einer Ausbeulung der flexiblen Beplankung 2 entstehenden seitlichen Öffnungen oberhalb der Spoilergrundform. Die Lamellenstruktur 18 ist an den Seitenkanten der flexiblen Beplankung 2 befestigt und da sie im Sinne des Richtungspfeiles 32 biegsam ist folgt sie der Ausbeulung der flexiblen Beplankung 2 wobei ihre einzelnen Lamellen überlappt bleiben. Die Überlappung der einzelnen Lamellen ist so ausgebildet, daß sie der Fahrtwind aufeinanderdrückt. Der Richtungspfeil 31 soll die Flugrichtung andeuten.

Fig.4a zeigt eine Draufsicht auf den rechten Spoilerrand und Fig 4b zeigt eine Lamellenstruktur 18 für diesen Spoilerrand in Seitenansicht. Zwischen den einzelnen Lamellen dieser Struktur ist ein Dämpfungsmaterial 30 integriert. Dieses dämpft das Flattern einzelner Lamellen, behindert aber nicht eine Verstellung der Lamellenstruktur infolge einer Ausbeulung der flexiblen Beplankung 2. Fig 4c zeigt den linken Spoilerrand in geschnittener Vorderansicht. Erkennbar ist das Überlappen der Spoilerseitenwand 15 von der Lamellenstruktur 18, die am Seitenrand der flexiblen Beplankung 2 befestigt ist. Weiterhin ist ein Längsspant 28 in Fig 4c zu sehen.

Abweichend von dem vorangehend beschriebenen Ausführungsbeispiel können die Strukturelemente 6 auch als einarmiger Hebel ausgebildet sein, der mit einem Ende am Spoiler gelagert ist, z.B. auf dem Spoilerhebel 24 und an dessen freien Hebelarmende die flexible Beplankung 2 mit ihrer Vorderkante 16 und auf einer Teillänge des Hebelarmes der Stellarm 12 des ersten Aktuators 3 und das Gestänge 9 angebunden ist.

Es kann auch nur ein erster Aktuator 3 mit einem Stellarm 12 und mit einem Strukturelement 6 für die erfindungsgemäße Lösung ausreichend sein. Außerdem muß der erste Aktuator 3 nicht zwingend auf dem Stellarm 13 des zweiten Aktuators 4 gelagert sein. Die ersten Aktuatoren 3 können bei angepaßten Strukturelementen 6,7,8,25 auch am oder im Spoiler 1 selbst gelagert sein.

Eine geeignete Ausbeulung der flexiblen Beplankung 2 zur Stoßkontrolle muß sich nicht, wie aus der vorangehenden Beschreibung ableitbar ist, parallel zur Spoilervorderkante 14 und über die gesamte Breite des Spoilers erstrecken, d.h. es können lokal begrenzte Ausbeulungen der flexiblen Beplankung 2 für eine Stoßkontrolle ausreichend sein.

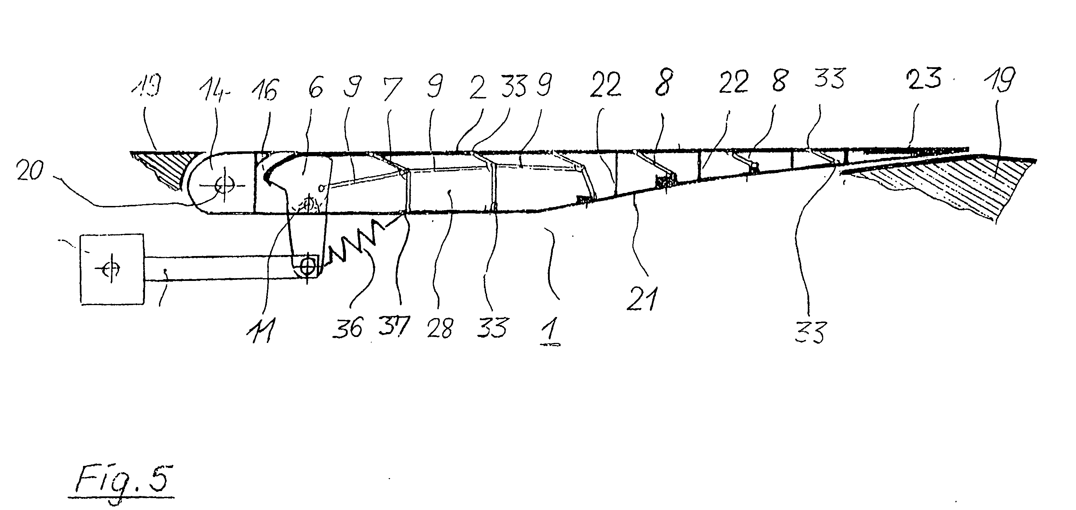

Der in Fig.5 gezeigte Spoiler mit nur einem Aktuator für den Stellbetrieb und für die Stoßkontrolle entspricht bis auf einige Änderungen dem voranstehend zu Fig. 1 beschriebenen Spoiler. Die in Fig.5 verwendeten Bezugszeichen stimmen so weit vorhanden mit denen von Fig. 1 überein.

Das als zweiarmiger Hebel ausgebildete Strukturelement 6 ist an seinem aus dem Spoiler 1 herausragenden Hebelarmende mit dem Stellarm 12 eines ersten Aktuators 3 verbunden. Außerdem wirkt zwischen diesem Hebelarmende und einem Angriffspunkt 37 an der Spoilerunterseite eine Zugfeder 36. Der Angriffspunkt 37 liegt von der Spoilervorderkante 14 aus gesehen hinter dem herausragenden Hebelarm.

Bei einer heranziehenden Betätigung des ersten Aktuators 3 wird wegen eines fehlenden Widerstandes der ausgestellte Spoiler 1 um das Hauptgelenk 20 ohne Dehnung der Zugfeder 36 und damit ohne Drehung des zweiarmigen Hebels um das Lager 11 auf die Oberfläche des Flugzeugtragflügels 19 gezogen, wo er zum Aufliegen kommt. Nach dem Aufliegen ist keine Fortsetzung der Drehung des Spoilers 1 um das Hauptlager 20 mehr möglich. Ein weiteres Heranziehen des Hebelarmendes führt dann zu einer Drehung des zweiarmigen Hebels um das Lager 11 bei einer Dehnung der Zugfeder 36. Diese Drehung des zweiarmigen Hebels führt über die Strukturelemente 7 und 8 zu der Ausbeulung der flexiblen Beplankung 2 wie zu Fig. 1 und Fig.2 voranstehend beschrieben worden ist. Es kann in dieser Version der Spoilerhebel 24, der zweite Aktuator 4 und sein Stellarm 13 eingespart werden. Diese Ausführung ist für Spoiler geeignet, auf deren Oberfläche eine geringe Sogwirkung auftritt, wodurch die Zugfeder 36 zum Straffen der flexiblen Beplankung 2 nicht allzu stark ausgelegt werden muß.

## Patentansprüche

1. Flugzeugtragflügel mit einem auf seiner Oberseite mit einer flexiblen Beplankung (2) versehenen Spoiler (1) und mindestens einem zur adaptiven Kontrolle von Stoßwellen über eine konvexe Ausbeulung der flexiblen Beplankung (2) auf diese einwirkenden Aktuator (3), wobei der/die Aktuator(en) (3) über mindestens ein erstes Strukturelement (6), welches im vorderen Bereich des Spoilers (1) drehbar gelagert ist und an dessen einem Ende die flexible Beplankung (2) befestigt ist, die zur Ausbeulung benötigte Länge an Beplankung an der Spoilervorderkante (14) derart bereitstellt, dass unter Aktuatoreinwirkung das mit der flexiblen Beplankung (2) verbundene Ende des ersten Strukturelementes (6) unter Ausbildung einer konvexen Ausbeulung in Richtung Spoilerhinterkante (23) geschoben wird, wobei gleichzeitig über im Spoiler (1) gelagerte zweite und dritte Strukturelemente (7, 8, 25), die teilweise an das erste Strukturelement (6) angekoppelt sind, das Schieben in Richtung Spoilerhinterkante (23) unterstützt wird und bei weiterer Aktuatorbetätigung die Lage der Ausbeulung bei konstanter Höhe entlang der Längserstreckung (10) des Spoilers (1) verschiebbar ist.

2. Flugzeugtragflügel nach Anspruch 1, **dadurch gekennzeichnet, dass** die im Spoiler (1) gelagerten zweiten Strukturelemente (7) über ein Gestänge (9) an das erste Strukturelement (6) angekoppelt sind.

3. Flugzeugtragflügel nach Anspruch 1 oder 2, **dadurch gekennzeichnet, dass** die im Spoiler (1) gelagerten zweiten Strukturelemente (7) an der flexiblen Beplankung (2) und an einer starren Beplankung der Spoilerunterseite (21) in Gelenken (33) aufgenommen sind.

4. Flugzeugtragflügel nach einem der Ansprüche 1 bis 3, **dadurch gekennzeichnet, dass** die im Spoiler (1) gelagerten dritten Strukturelemente (8), auf die kein Gestänge (9) einwirkt, im hinteren Teil des Spoilers (1) an der Ober- und Unterseite in Gelenken (33) gelagert sind.

5. Flugzeugtragflügel nach einem der Ansprüche 1 bis 4, **dadurch gekennzeichnet, dass** die Spoilerhinterkante (23) derart ausgebildet ist, dass die flexible Beplankung (2) und die Spoilerunterseite (21) gegeneinander in Spoilerrichtung (10) verschiebbar sind.

6. Flugzeugtragflügel nach einem der Ansprüche 1 bis 5, **dadurch gekennzeichnet, dass** sich die konvexe Ausbeulung parallel zur Spoilervorderkante (14) erstreckt.

7. Flugzeugtragflügel nach einem der Ansprüche 1 bis 6, **dadurch gekennzeichnet, dass** die Lage des Maximums der Ausbeulung (5) in Bezug auf die Spoilervorderkante (14) im Bereich von 30% bis 80% der Spoilertiefe veränderbar ist.

8. Flugzeugtragflügel nach einem der Ansprüche 1 bis 7, **dadurch gekennzeichnet, dass** der/die erste(en) Aktuator(en) (3) auf dem Stellarm (13) eines zweiten Aktuators (4), mit dem der Spoiler (1) im Flugzeugtragflügel (19) in bekannter Weise in seine verschiedenen Betriebsstellungen gestellt wird, gelenkig gelagert ist/sind.

9. Flugzeugtragflügel nach einem der Ansprüche 1 bis 8, **dadurch gekennzeichnet, dass** das mindestens eine erste Strukturelement (6) als zweiarmiger Hebel ausgebildet ist, an dessen oberem Hebelarmende die flexible Beplankung (2) mit ihrer Vorderkante (16) und an dessen unterem Hebelarmende der erste Aktuator (3) mit seinem Stellarm (12) angebunden ist.

10. Flugzeugtragflügel nach Anspruch 9, **dadurch gekennzeichnet, dass** der Aktuator (3) von der Spoilervorderkante (14) aus gesehen vor dem unteren Hebelarmende angeordnet ist, so dass durch ein Heranziehen des unteren Hebelarmendes durch den Aktuator (3) das obere Hebelarmende die Vorderkante (16) des flexiblen Beplankung (2) in Richtung Spoilerhinterkante (23) schiebt.

11. Flugzeugtragflügel nach Anspruch 9 oder 10, **dadurch gekennzeichnet, dass** eine Zugfeder (36) zwischen dem Hebelarmende, auf das der erste Aktuator (3) einwirkt, und dem Spoiler (1) angeordnet ist, und dass mit dem ersten Aktuator (3) der Spoiler (1) im Flugzeugtragflügel (19) in seine Betriebsstellung verstellt wird und bei Auflage des Spoilers (1) auf dem Flugzeugtragflügel (19) mit demselben Aktuator (3) bei einer Dehnung der Zugfeder (36) über das mindestens eine Strukturelement (6) und die im Spoiler (1) gelagerten Strukturelemente (7, 8, 25) auf die flexible Beplankung (2) derart eingewirkt wird, dass die konvexe Ausbeulung zur adaptiven Stoßkontrolle entsteht.

12. Flugzeugtragflügel nach einem der Ansprüche 1 bis 8, **dadurch gekennzeichnet, dass** das mindestens eine erste Strukturelement (6) als einarmiger Hebel ausgebildet ist, an dessen freiem Hebelarmende die flexible Beplankung (2) mit ihrer Vorderkante (16) und auf einer Teillänge des Hebelarmes der Stellarm (12) des ersten Aktuators (3) angebunden ist.

13. Flugzeugtragflügel nach einem der Ansprüche 1 bis 12, **dadurch gekennzeichnet, dass** zur Abdeckung der bei einer Ausbeulung entstehenden Öffnungen in den Spoilerseitenwänden (15) jeweils eine flexible, sich überdeckende Lamellenstruktur (18) vorgesehen ist.

14. Flugzeugtragflügel nach einem der Ansprüche 1 bis 13, **dadurch gekennzeichnet, dass** zwischen der Spoilervorderkante (14) und der Vorderkante (16) der flexiblen Beplankung (2) ein schmaler Schlitz (34) ausgebildet ist.

## Claims

1. An aircraft wing with a spoiler (1), which is provided with a flexible skin (2) on its upper side, and with at least one actuator (3) acting on said skin for the adaptive control of shock waves via a convex bulge of the flexible skin (2), wherein via at least one first structural element (6), which is rotatably supported in the front region of the spoiler (1) and on one end of which the flexible skin (2) is fastened, the actuator(s) (3) make(s) available the length of skin on the leading edge (14) of the spoiler that is needed for the bulge in such a way that under the influence of the actuator the end of the first structural element (6) connected to the flexible skin (2) is pushed in the direction of the trailing edge (23) of the spoiler, forming a convex bulge, the pushing in the direction of the trailing edge (23) of the spoiler being simultaneously assisted via second and third structural elements (7, 8, 25) supported in the spoiler (1) which are partially coupled to the first structural element (6), and upon further actuation of the actuator the position of the bulge is capable of being displaced, with constant height, along the longitudinal extent (10) of the spoiler (1).

2. Aircraft wing according to Claim 1, **characterised in that** the second structural elements (7) supported in the spoiler (1) are coupled to the first structural element (6) via a rod linkage (9).

3. Aircraft wing according to Claim 1 or 2, **characterised in that** the second structural elements (7) supported in the spoiler (1) are received in articulations (33) on the flexible skin (2) and on a rigid skin of the underside (21) of the spoiler.

4. Aircraft wing according to one of Claims 1 to 3, **characterised in that** the third structural elements (8) supported in the spoiler (1), on which no rod linkage (9) acts, are supported in articulations (33) in the rear part of the spoiler (1) on the upper side and underside.

5. Aircraft wing according to one of Claims 1 to 4, **characterised in that** the trailing edge (23) of the spoiler is designed in such a way that the flexible skin (2) and the underside (21) of the spoiler are capable of being displaced relative to one another in the spoiler direction (10).

6. Aircraft wing according to one of Claims 1 to 5, **characterised in that** the convex bulge extends parallel to the leading edge (14) of the spoiler.

7. Aircraft wing according to one of Claims 1 to 6, **characterised in that** the position of the maximum of the bulge (5) in relation to the leading edge (14) of the spoiler is capable of being changed within the range from 30% to 80% of the depth of the spoiler.

8. Aircraft wing according to one of Claims 1 to 7, **characterised in that** the first actuators(s) (3) is/are supported in articulated manner on the actuating arm (13) of a second actuator (4) with which the spoiler (1) in the aircraft wing (19) is placed in its various operating positions in known manner.

9. Aircraft wing according to one of Claims 1 to 8, **characterised in that** the at least one first structural element (6) takes the form of a two-armed lever, on the upper lever-arm end of which the flexible skin (2) is attached by its leading edge (16) and on the lower lever-arm end of which the first actuator (3) is attached by its actuating arm (12).

10. Aircraft wing according to Claim 9, **characterised in that** the actuator (3), viewed from the leading edge (14) of the spoiler, is arranged in front of the lower lever-arm end, so that as a result of a pulling-up of the lower lever-arm end by means of the actuator (3) the upper lever-arm end pushes the leading edge (16) of the flexible skin (2) in the direction of the trailing edge (23) of the spoiler.

11. Aircraft wing according to Claim 9 or 10, **characterised in that** a tension spring (36) is arranged between the lever-arm end on which the first actuator (3) acts and the spoiler (1), and **in that** the spoiler (1) in the aircraft wing (19) is adjusted into its operating position with the first actuator (3) and, in the case where the spoiler (1) is resting on the aircraft wing (19), in the event of an extension of the tension spring (36) over the at least one structural element (6) and the structural elements (7, 8, 25) supported in the spoiler (1) the flexible skin (2) is acted upon by the same actuator (3) in such a way that the convex bulge for adaptive shock control arises.

12. Aircraft wing according to one of Claims 1 to 8, **characterised in that** the at least one first structural element (6) takes the form of a one-armed lever, on the free lever-arm end of which the flexible skin (2) is attached by its leading edge (16), and the actuating arm (12) of the first actuator (3) is attached on a partial length of the lever arm.

13. Aircraft wing according to one of Claims 1 to 12, **characterised in that** for the purpose of covering the openings in the side walls (15) of the spoiler which arise in the event of a bulge a flexible, overlapping lamellar structure (18) is provided in each instance.

14. Aircraft wing according to one of Claims 1 to 13, **characterised in that** a narrow slot (34) is formed between the leading edge (14) of the spoiler and the leading edge (16) of the flexible skin (2).

## Revendications

1. Aile portante d'avion comportant un spoiler (1) dont le côté supérieur est muni d'un revêtement flexible (2) et d'au moins un actiorineur (3) agissant sur le revêtement flexible (2) pour produire son renflement convexe pour le contrôle adaptatif d'ondes de chocs,
selon lequel
le ou les actionneurs (3) assurent la longueur nécessaire au renflement du revêtement au niveau du bord d'attaque (14) du spoiler, par au moins un premier élément de structure (6) monté à rotation dans la zone avant du spoiler (1) et auquel est fixée une extrémité du revêtement flexible (2), de façon que par l'action du ou des actionneurs, l'extrémité reliée au revêtement flexible (2) du premier élément de structure (6) soit coulissée en direction du bord de fuite (23) du spoiler en formant un renflement convexe, et en même temps des seconds et troisièmes éléments de structure (7, 8, 25) logés dans le spoiler (1), et qui sont couplés en partie sur le premier élément de structure (6), assistent le coulissement en direction du bord de fuite (23) du spoiler et pour la poursuite de l'actionnement par le ou les actionneurs, la position du renflement est coulissée à hauteur constante le long de l'extension longitudinale (10) du spoiler (1).

2. Aile portante d'avion selon la revendication 1,
**caractérisée en ce que**
les seconds éléments de structure (7) montés dans le spoiler (1) sont couplés au premier élément de structure (6) par une tringlerie (9).

3. Aile portante d'avion selon l'une quelconque des revendications 1 ou 2,
**caractérisée en ce que**
les seconds éléments de structure (7) montés dans le spoiler (1) sont reçus dans des articulations (33) du revêtement flexible (2) et d'un revêtement rigide de l'intrados (21) du spoiler.

4. Aile portante d'avion selon l'une quelconque des revendications 1 à 3,
**caractérisée en ce que**
les troisièmes éléments de structure (8) logés dans le spoiler (1) et qui ne sont soumis à l'action d'aucune tringlerie (9), sont montés dans des articulations (33) de la partie arrière du spoiler (1) par le côté supérieur et le côté inférieur.

5. Aile portante d'avion selon l'une quelconque des revendications 1 à 4,
**caractérisée en ce que**
le bord de fuite (23) du spoiler est réalisé pour que le revêtement flexible (2) et l'intrados (21) du spoiler puissent coulisser l'un par rapport à l'autre dans la direction (10) du spoiler.

6. Aile portante d'avion selon l'une quelconque des revendications 1 à 5,
**caractérisée en ce que**
le renflement convexe s'étend parallèlement au bord d'attaque (14) du spoiler.

7. Aile portante d'avion selon l'une quelconque des revendications 1 à 6,
**caractérisée en ce que**
la position du maximum du renflement (5) par rapport au bord d'attaque (14) du spoiler peut être modifié dans une plage de 30 % à 80 % de la profondeur du spoiler.

8. Aile portante d'avion selon l'une quelconque des revendications 1 à 7,
**caractérisée en ce que**
le ou les premiers actionneurs (3) sont montés de manière articulée sur le bras de réglage (13) d'un second actionneur (4) par lequel lé spoiler (1) est positionné dans l'aile portante d'avion (19) de façon connue dans ces différentes positions de fonctionnement.

9. Aile portant d'avion selon l'une quelconque des revendications 1 à 8,
**caractérisée en ce qu'**
au moins un premier élément de structure (6) est réalisé comme levier à deux bras dont l'extrémité de bras de levier supérieur porte le revêtement souple (2) par son arête avant (16) et dont l'extrémité inférieure du bras de levier est reliée au premier actionneur (3) avec son bras de réglage (12).

10. Aile portant d'avion selon la revendication 9,
**caractérisée en ce que**
l'actionneur (3) vu du bord d'attaque (14) du spoiler se trouve sous l'extrémité inférieure du bras de levier de façon qu'en tirant l'extrémité inférieure du bras de levier par l'actionneur (3), l'extrémité supérieure du bras de levier déplace l'aréte avant (16) du revêtement flexible (2) en direction du bord de fuite (23) du spoiler.

11. Aile portante d'avion selon l'une quelconque des revendications 9 ou 10
**caractérisée par**
un ressort de traction (36) agissant entre l'extrémité de bras de levier sur le premier actionneur (3) et le spoiler (1), et
le premier actionneur (3) déplace le spoiler (1) dans sa position de fonctionnement dans l'aile portante d'avion (19) et lorsque le spoiler (1) arrive en appui sur l'aile portante d'avion (19) le même actionneur (3), en allongeant le ressort de traction (36) agit par l'intermédiaire d'au moins un élément de structure (6) et les éléments de structure (7, 8, 25) montés dans spoiler (1) sur le revêtement flexible (2) pour obtenir le renflement convexe pour le contrôle adaptatif des chocs.

12. Aile portante d'avion selon l'une quelconque des revendications 1 à 8,
**caractérisée en ce qu'**
au moins un premier élément de structure (6) est réalisé comme levier à un bras dont l'extrémité libre du bras de levier est reliée au bord avant (16) du revêtement flexible (2) et est fixée sur une partie de la longueur du bras de levier du bras de réglage (12) du premier actionneur (3).

13. Aile portante d'avion selon l'une quelconque des revendications 1 à 12,
**caractérisée en ce que**
pour couvrir les ouvertures formées lors du développement d'un renflement dans les parois latérales (15) du spoiler il est prévu une structure en lamelle (18) respective, flexible, et qui se chevauche.

14. Aile portante d'avion selon l'une quelconque des revendications 1 à 13,
**caractérisée par**
une fente étroite (34) prévue entre le bord d'attaque (14) du spoiler et l'arête avant (16) du revêtement flexible (2).
